Europäisches Patentamt

European Patent Office

Office européen des brevets

(19)

(11) Publication number : **0 497 235 A2**

# EUROPEAN PATENT APPLICATION

(21) Application number : **92101235.7**

(22) Date of filing : **27.01.92**

(51) Int. Cl.⁵ : **H04N 7/087**

Priority 310191 IT TO91000065.

(30) Priority : **31.01.91**

(43) Date of publication of application :
**05.08.92 Bulletin 92/32**

(84) Designated Contracting States :
**DE ES FR GB NL**

(71) Applicant : **EDICO S.r.l.**
**Via di Villa Emiliani, 24**
**I-00197 Roma (IT)**

(72) Inventor : **Dini, Roberto**
**via Malta, 9**
**I-10098 Rivoli (TO) (IT)**
Inventor : **Farina, Attilio**
**via Ventimiglia, 162**
**I-10127 Torino (IT)**
Inventor : **Zappala, Giuseppe, Dr.**
**C. so Stati Uniti, 4**
**I-10138 Torino (IT)**
Inventor : **Frezzato, Daniele**
**C.so Francia, 3/A**
**I-10093 Collegno (TO) (IT)**

(54) **Improved teletext transmission receiver.**

(57)  The present invention relates to a teletext transmission receiver, comprising means for receiving and demodulating a television signal, also decoding means for extracting the associated teletext signal and display means for displaying alternately or simultaneously the television image and the selected teletext page ; the principle characteristic of the invention consists in the fact that the receiver comprises additional means that allow for the simultaneous display of the television image and the teletext page without mixing the two.

FIG. 1

EP 0 497 235 A2

Jouve, 18, rue Saint-Denis, 75001 PARIS

The present invention relates to a teletext transmission receiver, comprising means for receiving and demodulating a television signal, also decoding for extracting the associated teletext signal and display means for displaying alternately or simultaneously the television image and the selected teletext page.

There are teletext transmission receivers known that comprise means for receiving a television signal and extracting the relative video signal, destined to be displayed by means of an appropriate image reproducing apparatus, and also comprising decoding means for extracting the eventual teletext signal (called Televideo by the RAI in Italy) associated to it.

Said teletext signal consists of a number of numbered pages that are transmitted in sequence during several lines of the frame return in the television signal; said pages are appropriately coded and there is the necessity of an appropriate decoder for their reception. The decoder allows for the displaying of one of the teletext pages, selected by the user from those transmitted, alternately or mixed on the normal television image.

Being superimposed it should allow the user to simultaneously follow the normal television image and the selected teletext page, however the effect of the superimposition of the teletext page is such that the television image results in being greatly spoiled to the extent that is is difficult to view; and even the teletext page is read with difficulty.

The invention is based on the acknowlegment of this fact and on the fact that it would however be greatly useful in determined cases to be able to read a teletext page, for example that of the latest news, without loosing the display of the television image.

The aim of the present invention is therefore that of indicating a teletext transmissions receiver more flexible than those of the type known, able to satisfy the needs of the user that is not satisfied with the known receivers.

To allow for such aims the present invention has as its object a teletext transmission receiver, comprising means for receiving and demodulating a television signal, also decoding means for extracting the associated teletext signal and display means for displaying alternately or simultaneously the television image and the selected teletext page, characterised by the fact that the receiver comprises additional means that allow for the simultaneous display of the television image and the teletext page without mixing the two.

Further aims and advantages of the present invention will become clear from the detailed description that follows and from the annexed drawings, supplied as non-limiting example, wherein:

figure 1 schematically represents a part of the electrical circuit of a teletext transmission receiver;

figure 2 schematically represents in greater detail a part of the circuit of the receiver in figure 1;

figure 3 schematically represents several circuits to be added to the circuit in figure 1;

figure 4 is a representation of the screen of a receiver according to the invention;

figure 5 schematically represents the significant logic blocks of an alternate implementation of the receiver according to the invention.

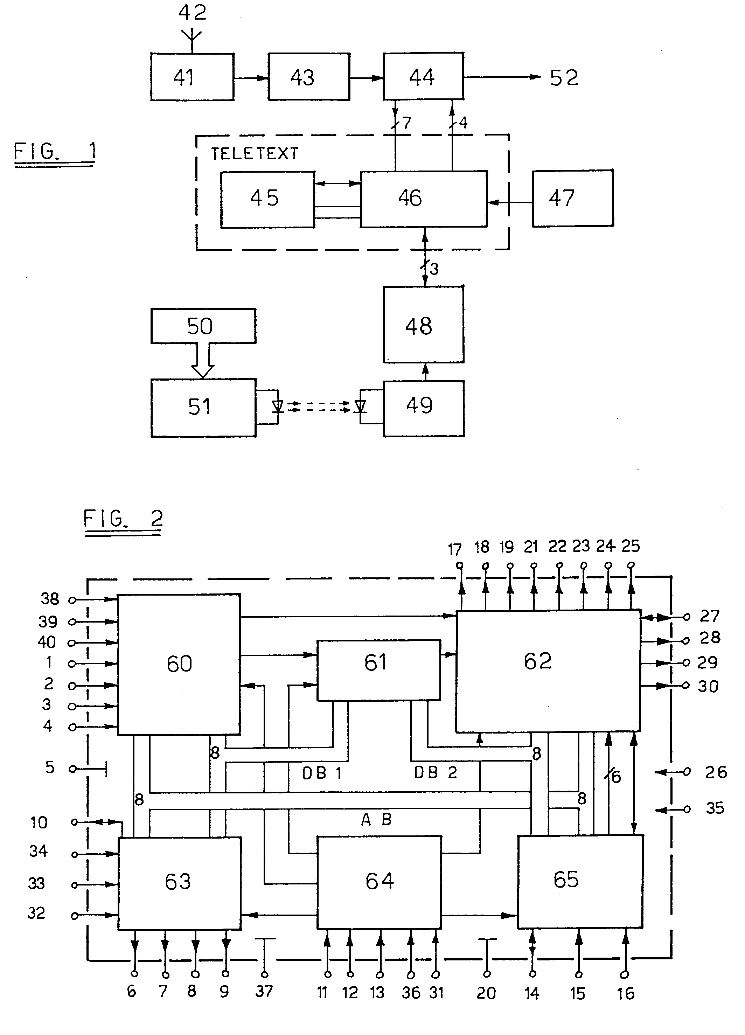

In figure 1 the reference number 42 indicates a receiving antenna, connected to a television receiver for picking up the television transmission signals, containing the teletext signals. Said antenna is connected to a conventional tuner, indicated with the reference number 41; said tuner is followed by a conventional amplifier of intermediate frequency signal, comprising a video detector, indicated with the number 43.

The amplifier 43 supplies at its output the composite video signal and is connected to an amplifing circuit and a video signal elaborator indicated with the reference number 44; the elaborator circuit 44 can be of the VCU 2133 type for example made by ITT, which also executes the analogic-digital conversion and the digital-analogic reconversion of the signal; at the output (reference nuber 52) of circuit 44 the three signals RGB (red, green, blue) are available for the image display device (for instance a colour television screen, not represented in the figure).

The processing circuit 44 is connected, by means of two multifilter connectors, to a processing circuit of teletext signals, indicated with the reference number 46; such circuit 46 can be of the TPU 2732 type by ITT, or an equivalent circuit by another manufacturer.

The functioning of circuit 46 will be explained in detail later in relation to figure 2.

The processing circuit of teletext signals 46 is connected to another three circuits, namely:

– a memory of the RAM type (read and write), for instance of 64K bit, indicated with the reference number 45; this has the task of memorising eight teletext pages;

– a clock circuit generator, indicated with the reference number 47; this can be of the CMU 2632 type by ITT, that produces a clock signal of 17,734475 MHz;

– a central control unit, indicated with the reference number 48, that can be of the CCU 2030 type by ITT.

Said central control unit, apart from circuit 46, is connected to an amplifing circuit, indicated with the reference number 49, that works as a receiver of infra-red rays signals, coming from a remote control device, indicated with the reference number 51; this is connected to a command keyboard, indicated with the number 50.

The commands given by the user, by means of the keyboard 50, by means of the transmitter 51 and the receiver 49, arrive at the control unit 48, that provides for the decoding of said commands and to supply the appropriate control signals to the circuit 46.

Figure 2 represents in major detail the internal circuit of the processing circuit of teletext signals 46, that is assumed, for instance, to correspond to the type TPU 2732.

Reference numbers 1-40 represent the 40 connecting pins of circuit 46.

Reference number 60 indicates a data acquisition unit, that receives, by means of the pins 1-4 and 38-40 the digitalized input video signal, coming from circuit 44.

Reference number 61 indicates a RAM memory that works as a buffer of the teletext page to be displayed.

Reference number 62 indicates a control unit of the eight page memory 45; with said memory 45 the control unit 62 is infact connected by means of the pins 17-25, with it supplies the addresses, and with the pins 27-30, with which it supplies the data and the control signals.

Reference number 63 represents a unit comprising a character generator and a display control circuit; said unit 63 is connected to circuit 44 by means of pins 6-7-8 (output R, G, B signals) and to the same circuit 44 by means of pin 9, which can supply a fast blanking signal, for the image commutation TV/teletext.

Apart from this, unit 63 can be connected to an external image source by means of pins 32-33-34 (input R, G, B signals); and with pin 10, from which an external blanking signal can be received.

Reference number 64 indicates a central timing unit, connected to pins:
11 from which it receives the line blanking signal;
12 from which it receives the frame blanking signal;
13 that is a reset terminal;
32 from which it receives a deflection skew data (DSD) signal;
36 from which it receives the clock signal from circuit 47.

Reference number 65 indicates a bus interface (IM bus) coming from the control unit 48.

Inside circuit 46 the various connections between diverse circuitry blocks described are indicated in figure 2; DB1 means Data Bus 1; DB2 means Data Bus 2; AB means Adress Bus.

The functioning of the circuit of figure 2 is the following.

The functioning is strictly controlled by the vertical signal of the television receiver; the acquisition of the teletext data starts in line 7 and finishes at line 22; the teletext information is synchronised and identified; a comparator, contained in unit 60, pre-selects the pages whose numbers have been called by the control unit 48 and inserts them in memory 45; the internal memory 65 is used as a buffer.

The display of the teletext page starts on line 48 and finishes on line 286; unit 63 selects one of the eight pages in memory for the display; the words of 8 bits (characters) are transformed into a 6x10 point matrix by the character generator and are displayed in 24 lines of 40 characters each.

Circuit 46 receives commands from unit 48 through the IM bus (pins 14-15-16).

The external memory is organised into 8 sectors of 8 Kbits each; each sector is organised into 25 lines of 40 bytes each, plus a line of 24 bytes; the lines 0-23 represent the 24 lines of the teletext page to be displayed; line 25 of every sector is used for the control information of the relative sector, while line 24 of sector zero and one respectively contain general control information and the rolling header.

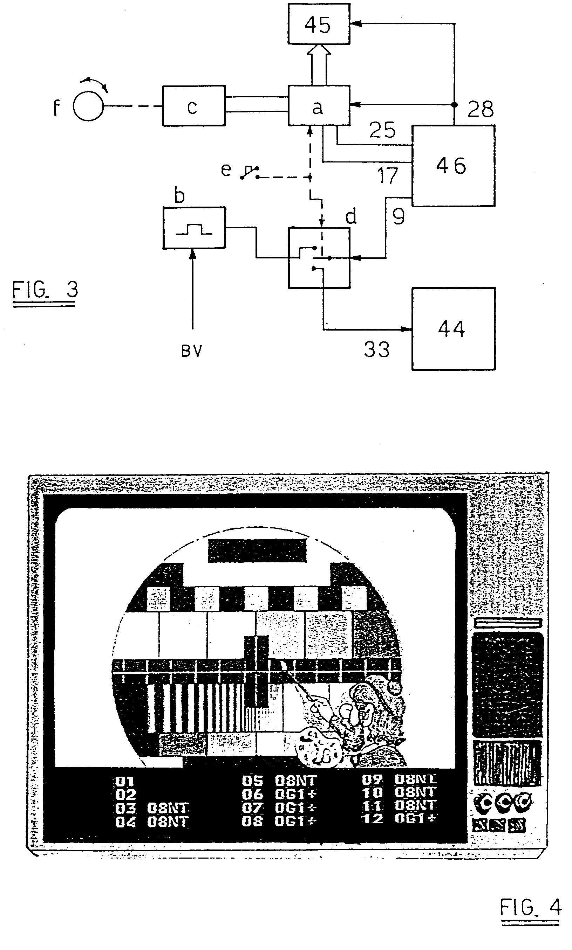

In reference to figure 3, so as to implement the concept of the present invention by means of the circuits decribed herein (figures 1 and 2), it is necessary for example to arrange for:

− (a) an address modifying circuit, activated from an external command unit (e) and controlled by pin 28 of circuit 46 (R/W); said modifying circuit has to intercept the connections that carry the addresses to the external memory 45 (pins 17-25 of the circuit 46) so as to modify said addresses in the moment that the circuit 46 reads the external memory, so that instead of the last 4 lines of the page (lines 20-23 of the sector of the memory of interest) other lines are read, for example the first 4 lines (lines 0-3 of the same sector; it must be possible to change the lines read with a certain regularity, for instance every second; so that if the lines read were lines 0-3 of the memory sector, after one second the lines 1-4 would be read, and so on; for obtaining such a result it is sufficient to appropriately vary the addresses of the memory.

− (b) a fast blanking signal generator, that produces an impulse of 1 volt having the duration of approximately 5 milliseconds (55-60 television lines), positioned in correspondence with the inferior section of the image (the last 5 millisecond of the frame), i.e. from line 255 to line 312; such a generator can be obtain for example with a normal bistable circuit, joined to the frame return (BV), and dimensioned do as to have the requested duty cycle.

− (c) an address generator, self-increasing or decreasing for circuit(a).

− (d) an electronic commutator for commutating the signal of the generator (b) in place of the fast blanking signal coming from pin 9 of circuit 46, to be applied to pin 33 of circuit 44.

− (e) a command organ (preferably a key, possibly on the keyboard 50) for activating the circuits (a) and (d) so as to obtain the display of the television image in the scanned lines up to approximately the 255 th and the display of part (for example 4 teletext lines) of the teletext page in the remaining lines.

The part of the teletext page displayed, i.e. the lines shown in the inferior part of the screen, is determined by the address generators of circuit (c); the varying of the addresses can be carried out manually using a command button (f), or automatically by appropriately realising the generator (c); the automatic variation could be such that the entire teletext page is scrolled upwardly in approximately 20 seconds.

The scrolling may also be manual and commanded by using, instead of the button (f), the keys "+" and "-", normally supplied on the keyborad 50, keeping them depressed until the desired amount of scrolling has taken place, that could be of the speed of approximately one line per second, unsing the "+" key for upward scrolling or the "-" key for downward scrolling so as that every line of the page is eventually displayed in the inferior section of the image.

Figure 4 is a representation of the screen of a receiver according to the invention, during the combined display of a television image (four fifths of the screen) and of part (four lines) of a teletext page (on the inferior fifth).

The implementation of the circuit according to the invention is able to activate the combined display of only the pages already acquired and memorised in memory 45.

However other implementation of the circuit according to the invention are possible; a modified teletext decoder 46 can be conveniently used for example, that already has the fulfilled functions provided internally of the external functions of the circuits in figure 3, and/or to program differently the control unit 48, so as to enable the display, as commanded, of only part of the selected teletext page, on the inferior part of the screen, leaving the rest of the screen free for the television image.

In this way it is also possible that, once all the lines of a teletext page have been displayed by means of upward scrolling, manually or automatically, the next successive teletext page be displayed; infact the control unit 48 can be provided for giving, at an appropriate moment, the page change command; the next page should preferably be the one actually transmitted and not that arithmetically successive as a number, maybe not even transmitted; something that can be reached with the known systems, such as indicated in the Italian patent application N° 67968/A-90 for example.

Similarly, in the case of downward scrolling, it is possible that, after all the lines of the teletext page have been displayed by means of scrolling, the command for displaying the former page be given automatically (as in the previous case, the page actually transmitted and not that arithmetically preceding.)

The invention may be further implemented in a different way, by using integrated circuits by Seimens, instead of those by ITT, and precisely integrated SDA 5231's (acquisition units), SDA 5241's (C.C.T.), TMM2064's (memory), SDA 2083's (microprocessors).

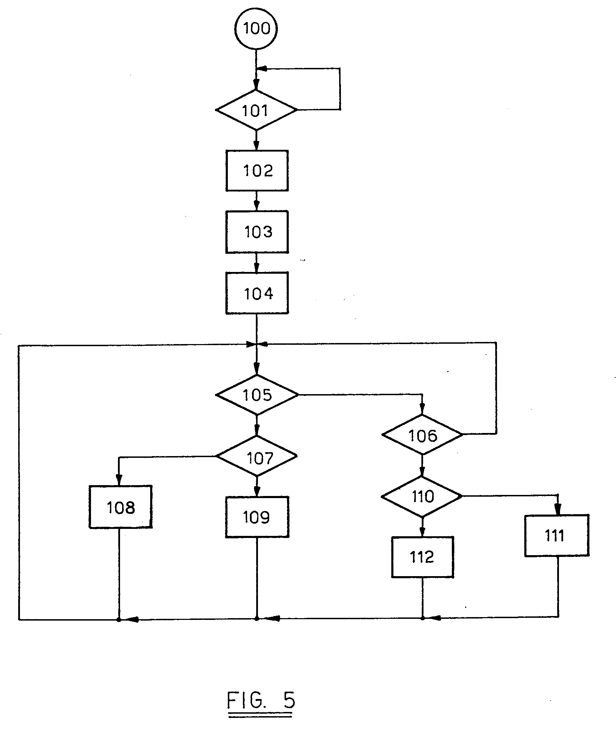

In such a case, by providing the system with an additional buffer memory of the teletext page capacity, that for simplicity sake will be called from here on MTA, and providing the microprocessor with appropriate programmed logic, it becomes possible to obtain the action that will now be described, with reference to figure 5.

In figure 5 block 100 is the starting block of the part of logic of interest for the implementation of the invention; the starting block 100 passes control to the successives block 101.

Block 101 is a testing block, it verifies whether the command organ "e" has been activated; if positive (output YES) control passes to block 102; if negative (output NO9) control returns to block 101. In all the test blocks of the diagram, the output YES is in the inferior side whereas the output NO is in the lateral side.

Block 102 provides for determining the selected page and passes control to the successive block 103.

Block 103 copies the selected page from the memory 45 to the memory MTA and passes control to the successive block 104.

Block 104 writes in memory 45 a fictitious page, instead of the selected page, made up of 20 black lines and of the first 4 lines of the page copied in the tampon memory MTA; control then passes to block 105.

Block 105 is a testing block, it verifies whether the key "+" has been activated; if positive control passes to block 107; if negative control returns to block 106.

Block 106 is a testing block, it verifies whether the key "-" has been activated; if positive control passes to block 110; if negative control is passed to block 111.

Block 107 is a testing block, it verifies whether the selected page has finished (i.e. whether the actual lines being displayed are the final 4); if positive control passes to block 109; if negative control is passed to 108.

Block 108 increases the lines being displayed, i.e. if the lines being displayed were lines 1-4, it would pass to lines 2-5, writing them in memory 45 in place of the former, control then passes back to block 105.

Block 109 increases the page displayed: that is to say:
– re-copies from the memory buffer MTA to memory 45 from where it was originally transfered;
– carries out the normal next page operation, i.e. displays the successive page to that formally displayed;
– re-copies such successive page in the memory buffer MTA;
– writes a fictitous page in memory 45 made up of 20 black lines and of the first 4 lines of the new page selected.
Control then passes to block 105.

Block 110 is a testing block, that verifies whether the selected page is at the beginning, i.e. whether the lines being displayed are the first 4, if positive control passes to block 112, if negative control passes to block 111.

Block 111 decreases the lines displayed, that is whether the lines displayed were lines 2-5, passes on to display lines 1-4, writing them in memory 45 in place of the former; control then passes to block 105.

Block 112 decreases the displayed page: that is to say:

– re-copies from the memory buffer MTA to memory 45 from where it was originally transfered;
– carries out the normal former page operation, i.e. displays the former page to that formally displayed;
– re-copies such former page in the memory buffer MTA;
– writes a fictitous page in memory 45 made up of 20 black lines and of the first 4 lines of the new page selected.

Control then passes to block 105.

It is clear from the description of figure 5, that the logic diagram as pointed out corresponds to the case of manual line scrolling, carried out by using the keys "+" and "-", passing automatically to the successive page or former, when all the lines have been displayed. In a similar way it would be possible to implement a logic that automatically carries out the scrolling of the lines of a teletext page.

It is clear that for the simultaneous display of a television image (on the superior section of the screen) and the display of the teletext lines (on the inferior section of the screen) the mix mode is however utilised.

The characteristics of the teletext transmissions receiver result in being clear from the present description and annexed drawings.

From the present description the advantages of the teletext transmissions, object of the present invention also result in being clear.

In particular they consist in the fact it is possible to consult both the contents of a teletext page whilst continuing to follow the normal television image, without the reduced quality caused by superimposing.

It is clear that the described teletext transmissions receiver is more flexible than those known; it is also clear that numerous variants are possible by the man of the art, to the teletext transmissions receiver described as an example, without however departing from the novelty principles inherent in the invention.

For instance the teletext window could be of different dimensions than those described, or it could be placed in the superior part of the screen as opposed to the inferior.

## Claims

1. Teletext transmission receiver, comprising means (41,42,43) for receiving and demodulating a television signal, also decoding means (46) for extracting the associated teletext signal and display means for displaying alternately or simultaneously the television image and the selected teletext page, characterised by the fact that the receiver comprises additional means (a, b, c, d, e, f; 101-112) that allow for the simultaneous display of the television image and the teletext page without mixing the two.

2. Teletext transmission receiver, according to claim 1, characterised by the fact that the part containing the teletext page is displayed on the inferior section of the television screen (fig. 4).

3. Teletext transmission receiver, according to claim 2, characterised by the fact that the inferior part of the television image is substituted by the display, on a black background, of the first lines of a teletext page.

4. Teletext transmission receiver, according to claim 3, characterised by the fact that said first lines of a teletext page displayed are scrolled upwards automatically, in said inferior strip of the image, with a pre-determined speed, in a way that all the lines of a page are eventually displayed in said strip.

5. Teletext transmission receiver, according to claim 3, characterised by the fact that said first linesd of a teletext page displayed are scrolled upwards or downwards if and only if the user keeps the appropriate key depressed ("+"; "-"), with the scrolling at a pre-determined speed, in a way that all the lines of a page are eventually displayed in said strip.

6. Teletext transmission receiver, according to claim 4 and 5, characterised by the fact that said determined scrolling speed corresponds to approximately one line per second.

7. Teletext transmission receiver, according to claim 4 and 5, characterised by the fact that once that all the lines of a teletext page have been displayed, the next teletext page is displayed.

8. Teletext transmission receiver, according to claim 7, characterised by the fact that said next page is that transmitted in the cycle, not necessarily that having a successive arithmetical number, which may not even be transmitted.

9. Teletext transmission receiver, according to claim 4 and 5, characterised by the fact that said additional means comprise an address generator (c) for obtaining said scrolling in the display of the teletext page.

10. Teletext transmission receiver, according to claim 4 and 5, characterised by the fact that said additional means comprise a manual command organ (f) for controlling scrolling.

11. Teletext transmission receiver, according to one of the previous claims, characterised by the fact that said additional means comprise a fast blanking signal generator (b) for creating a black strip on the inferior part of the television screen.

12. Teletext transmission receiver, according to one of the previous claims, characterised by the fact that said additional means comprise an address modifying circuit (a) for memory 45 where the teletext page to be displayed is memorised.

13. Teletext transmission receiver, according to claim 9 and 12, characterised by the fact that said address generator (c) controls said address modifying circuit (a) for memory 45 where the teletext page to be displayed is memorised.

14. Teletext transmission receiver, according to one of the previous claims, characterised by the fact that said additional means are comprised with at least one commutation circuit (d) for commutating a reference signal for displaying the teletext page.

15. Teletext transmission receiver, according to claim 11 and 14, characterised by the fact that said commutation circuit (d) has the task of commutating the signal coming from said fast blanking signal generator (b) in place of that coming from said decoding means (46) for extracting the teletext signal.

16. Teletext transmission receiver, according to one of the previous claims, characterised by the fact that said additional means comprise a manual command organ (e) for the control of the combined display of the television image and the teletext page without being superimposed.

17. Teletext transmission receiver, according to one of the previous claims, characterised by the fact that said additional means that allow for the simulataneous display of the television image and the teletext page without being superimposed are comprised in said decoding means (46) for extracting the teletext signal.

18. Teletext transmission receiver, according to claim 3, characterised by the fact that said first lines are in numbers of four.

19. Teletext transmission receiver, according to claim 11, characterised by the fact that said fast blanking signal generator (b) in creating a black strip along the inferior section of the television screen generates a rectangular impulse lasting approximately 5 milliseconds.

20. Teletext transmission receiver, according to claim 16, characterised by the fact that said manual command organ for the control of the combined display of the television image and the teletext page without mixing comprises a key of a remote control unit (50).

21. Teletext transmission receiver, according to claim 1, characterised by the fact that said manual command organ for the control of the combined display of the television image and the teletext page without mixing of the two, comprises a series of logic blocks (101-112).

22. Teletext transmission receiver, according to claim 21, characterised by the fact that said logic blocks (101-112) are implemented in a programmed logic and control a microprocessor.

23. Teletext transmission receiver, according to claim 21, characterised by the fact that a buffer memory (MTA) is utilised in which the data of a teletext page to be displayed is re-copied, already having been acquired and memorised by the decoder (46), and that a fictitous page is successively composed constituted by black lines, except for the last ones, which are taken from said buffer memory (MTA).

24. Teletext transmission receiver, according to claim 23, characterised by the fact that said last lines become substituted, in said fictitous page, with other lines taken from the buffer memory, so as to produce the scrolling effect.

FIG. 1

FIG. 2

FIG. 3

FIG. 4

FIG. 5